# EUROPEAN PATENT APPLICATION

(11) **EP 1 413 962 A2**
(43) Date of publication of application: **28.04.2004**
(21) Application number: 03023877.8
(22) Date of filing: 21.10.2003
(51) Int. Cl.: G06F 17/30

(54) **Image search apparatus**

(30) Priority: 22.10.2002 JP 2002307574
(71) Applicant: MATSUSHITA ELECTRIC INDUSTRIAL CO., LTD., Kadoma-shi, Osaka 571-0050 (JP)
(72) Inventor: Shibata, Akira, Yokohama-shi Kanagawa 222-0031 (JP); Iseto, Hirofumi, Yokohama-shi Kangawa 221-0004 (JP); Nakaya, Wataru, Yokohama-shi Kangawa 244-0002 (JP); Ebisawa, Jun, Yokohama-shi Kangawa 232-0066 (JP); Sakai, Takehiko, Yokohama-shi Kangawa 240-0041 (JP); Ogawa, Ichiro, Yokohama-shi Kangawa 240-0001 (JP)
(74) Representative: Pautex Schneider, Nicole

(57) **Abstract**

An image search apparatus, which searches for an arbitrary image on an HDD whereon images, obtained by monitor cameras, are recorded in a time sequence for each screen, has a CPU which sequentially reads images from the HDD for individual screens, comparing means compares an image read by the CPU with a subsequently read image, designates the subsequently read image as an arbitrary image when the two images do not match, and transmits the arbitrary image to the CPU as the search results. Therefore, the image search apparatus can easily search for an arbitrary image among images that have been photographed by cameras and have been recorded in a time sequence.

## Description

### Background of the Invention

### Field of the Invention

The present invention relates to an image search apparatus that searches an image recording means, wherein images picked up by a camera are recorded in a time sequence, for an arbitrary image.

### Description of the Related Art

A conventional image search apparatus, which records images obtained by a monitor camera and searches the recorded images to extract a desired image, generally employs a search method for the recorded image that is based on the reading of accompanying attribute data, such as date information and alarm information, that are stored with the images.

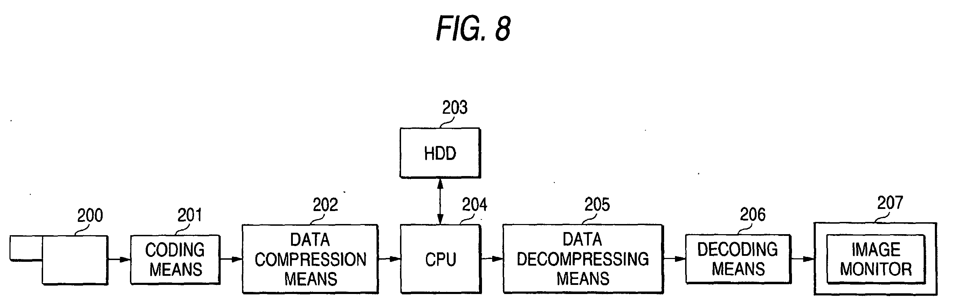

Fig. 8 is a block diagram showing the configuration of a conventional image search apparatus.

As is shown in Fig. 8, in this image search apparatus, coding means 201, data compression means 202, a hard disk drive (hereinafter referred to as an HDD) 203 serving as storage means, central processing means (hereinafter referred to as a CPU) 204, data decompressing means 205, decoding means 206 and image monitor 207 are connected to a camera 200.

In the thus arranged image searching apparatus, the coding means 201 converts a video signal output by the camera 200 into coded image data, the data compression means 202 compresses the coded image data, and the CPU 204 stores the compressed image data in the HDD 203 with attribute data, such as photography date information and alarm information, that are provided for the individual images. For image reproduction, the CPU 204, based on attribute data such as date information, sequentially reads image data from the HDD 203, the data decompressing means 205 decompresses the image data, and the decoding means 206 decodes the decompressed data and outputs the resultant data as an image signal to the image monitor 207 (see JP-A-7-160729).

JP-A-7-160729 is known as a related art.

The conventional image search apparatus performs a search based only on the attribute data, such as photography date information and alarm information. Therefore, when a photography date is unknown or there is no accompanying alarm information, or when a user cannot specify a photography date for an image to be searched for, to find a desired image, all the recorded images must be sequentially displayed.

Since a fixed camera used for a monitor camera system records images for an extended period of time, the volume of the images recorded is especially huge, and performing a conventional image search operation is very troublesome. Further, since a plurality of fixed cameras is frequently employed for a monitor camera system, an even larger amount of image data may be recorded, making it extremely difficult for a desired image to be found by searching the images obtained by the fixed cameras.

### Summary of the Invention

The object of the present invention is to provide an image search apparatus that can easily find an arbitrary image by searching images picked up by a camera and recorded in a time sequence.

The present invention provides an image search apparatus, which searches an image recording means, wherein images picked up by a camera are recorded in a time sequence, for an arbitrary image, has: reading means for sequentially reading images from the image recording means; comparing means for performing a comparison a first image read by the reading means between a second image subsequently read; and defining means for defining the second image as the arbitrary image when the first image and the second image are not match as a result of comparison by the comparing means; and transmitting means for transmitting the second image as a search result.

With this configuration, when there is a difference between the two images, which are recorded in the time sequence, the second image, which differs from the first image, is designated the arbitrary image, and this image is transmitted as the search results. Therefore, based on this transmission, the fast scanning for an image for which a change is found in the time sequence is changed. Thus, even when attribute data accompanying with images cannot be used to perform an image search, an arbitrary image can easily be found among the images that have been obtained by the camera and recorded in the time sequence.

Furthermore, the comparing means compares a predetermined area of the first image read by the reading means with the predetermined area of the second image.

With this configuration, since only the predetermined areas in the images are compared, the processing load imposed on the comparing means is reduced, and as a result, a fast image search can be performed.

Furthermore, the image searching apparatus, wherein the images are recorded in the image recording means as image data which are obtained by coding image signals inputted from the camera and by compressing the coded image signals, the image searching apparatus further has: data decompressing means for decompressing image data read by the reading means; decoding means for decoding image data decompressed by the data decompressing means; and transfer means for transferring the image data decoded by the decoding means to a display device, wherein the comparing means performs the comparison with the image data decompressed by the data decompressing means, the reading means halts the sequential reading of images based on the search result transmitted from the transmitting means, and the data decompressing means transmits image data of only the second image defined as the arbitrary image to the decoding means based on the search result transmitted from the transmitting means.

With this configuration, upon receiving the search result transmitted from the transmitting means, the reading of image data is halted, and only image data of image defined as the arbitrary image are decoded to display on the display device. Thus, the processing load imposed on the decoding means is reduced, and a fast image search is enabled.

Furthermore, the image searching apparatus, wherein the images are recorded in the image recording means as image data which are obtained by coding image signals inputted from the camera and by compressing the coded image signals, the image searching apparatus further has: data decompressing means for decompressing image data read by the reading means; decoding means for decoding image data decompressed by the data decompressing means; and transfer means for transferring the image data decoded by the decoding means to a display device, wherein the comparing means performs the comparison with the image data decompressed by the data decompressing means, the data decompressing means sequentially transmits image data of the second image defined as the arbitrary image and image data which are successively read and decompressed to the decoding means based on the search result transmitted from the transmitting means.

With this configuration, the image data recorded in the time sequence are sequentially decoded and displayed, beginning with the image data defined as the arbitrary image. As a result, the fast scanning can be performed for the images obtained from the time sequence to find an image for which there is a change, and at this point, the display of images can be started immediately.

When a transmission is not issued by the transmitting means, no images are displayed (decoding is not performed), so that the processing load imposed on the decoding means can be reduced. Therefore, overall, the processing load imposed on the apparatus can be reduced and a fast image search can be performed.

Furthermore, the image search apparatus further comprises: holding means for obtaining and holding attribute data accompanying with the second image defined as the arbitrary image based on the search result transmitted from the transmitting means; producing means for producing list data in which the attribute data held by the holding means are organized after the reading means completes the sequential reading of images; and transfer means for transmitting the list data produced by the producing means to the display device which displays a list based on the list data.

With this configuration, the attribute data accompanying with an image defined as an arbitrary image are held, and after the sequential image reading has been completed, a list of the stored attribute data is displayed on the display device. Thus, the conditions for the performance of a search for an arbitrary image can be confirmed by the display of the list on the display device.

Furthermore, the image search apparatus, wherein the images are recorded in the image recording means as image data which are obtained by coding image signals inputted from the camera and by compressing the coded image signals, the image searching apparatus further comprises: data decompressing means for decompressing image data read by the reading means; decoding means for decoding image data decompressed by the data decompressing means; transfer means for transferring the image data decoded by the decoding means to a display device; holding means for obtaining and holding attribute data accompanying with the second image defined as the arbitrary image based on the search result transmitted from the transmitting means; and producing means for producing list data in which the attribute data held by the holding means are organized after the reading means completes the sequential reading of images, wherein the comparing means performs the comparison with the image data decompressed by the data decompressing means, the data decompressing means transmits image data of only the second image defined as the arbitrary image to the decoding means, and the transfer means transmits the list data produced by the producing means to the display device which displays a list based on the list data.

With this configuration, the attribute data accompanying with the image data defined as the arbitrary image are held by the holding means, and after the sequential image reading has been completed, a list of the attribute data is displayed on the display device. In addition, only images are displayed that are based on image data for which a difference has been found.

Therefore, when an image search using the attribute data accompanying with the image data cannot be performed, necessary conditions for a search for an arbitrary image can be confirmed by displaying the attribute data on the display device.

Also, since the image data defined as the arbitrary image are displayed on the display device, the correlation between the image data defined as the arbitrary image and the accompanying attribute data can be clearly understood.

Furthermore, the image search apparatus further has: storage means for storing the list data produced by the producing means.

With this configuration, since the list data can be stored, once a search for image data has been completed, only the accompanying list data must be read to perform the next search, and thus, an image search can be performed by using as the search conditions the attribute data for the image data.

### Brief Description of the Drawings

Fig. 1 is a block diagram showing the configuration of an image search apparatus according to a first embodiment of the invention;
Fig. 2 is a flowchart for explaining the image search processing performed by the image search apparatus according to the first embodiment of the invention;
Fig. 3 is a flowchart for explaining the image search processing performed by an image search apparatus according to a second embodiment of the invention;
Fig. 4 is a flowchart for explaining the image search processing performed by an image search apparatus according to a third embodiment of the invention;
Fig. 5 is a flowchart for explaining the image search processing performed by an image search apparatus according to a fourth embodiment of the invention;
Fig. 6 is a flowchart for explaining the image search processing performed by an image search apparatus according to a fifth embodiment of the invention;
Fig. 7 is a flowchart for explaining the image search processing performed by an image search apparatus according to a sixth embodiment of the invention; and
Fig. 8 is a block diagram showing the configuration of a conventional image search apparatus.

### Detailed Description of the Preferred Embodiments

The preferred embodiments of the present invention will now be described while referring to the drawings. According to each embodiment of the invention, an image search apparatus is employed for a monitor camera system that records images photographed by a plurality of cameras installed in a parking lot, and monitors the situation in the parking lot by displaying the recorded images on a display device. It should be noted that both movable and fixed cameras are employed as monitor cameras.

Further, according to each embodiment, the image search apparatus has a function for recording, in a time sequence, images input by the monitor cameras and for searching the recorded images for an arbitrary image. In addition, multiple monitor cameras are not necessarily employed.

### (First Embodiment)

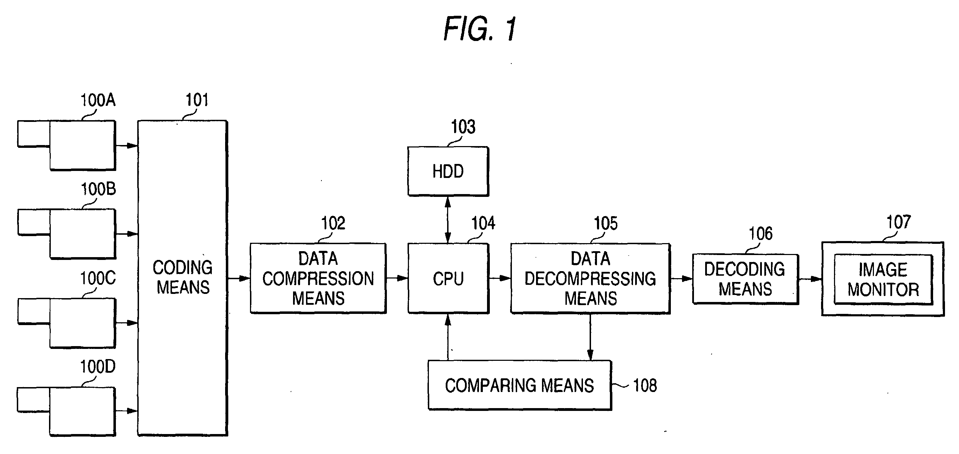

Fig. 1 is a block diagram showing the configuration of an image search apparatus according to a first embodiment of the invention. The image search apparatus has a plurality of monitor cameras 100A to 100D; coding means 101 which converts video signals received inputted from the monitor cameras 100A to 100D into image data; data compression means 102 which compresses the coded image data; a CPU 104 which writes the compressed image data and attribute data (such as photography date information and alarm information) of images picked up by each monitor camera to an HDD 103 in a time sequences, or reads the image data from the HDD 103 in a time sequence; data decompressing means 105 which decompresses the image data that the CPU 104 has read from the HDD 103; decoding means 106 which decodes the decompressed image data and outputs the decoded image data as video signals; an image monitor 107 which displays, on a display screen, the video signals output by the decoding means 106; and comparing means 108 which compares the data areas (predetermined areas) for the two sets of image data decompressed by the data decompressing means 105.

The comparing means 108 compares the data area designated for the image data decompressed by the data decompressing means 105 with the data area for the image data that is decompressed next, and detects a difference between these two image data sets. The CPU 104 controls the reading of image data and the decoding of image data on the basis of the comparison results obtained by the comparing means 108.

The data area designated for the image data is a portion that the comparing means 108 employs for the comparison of two sets of image data. This area can be determined by the manager of the monitor camera system, and indicates which image data is to generate a predetermined portion of an image to be displayed on the image monitor 107. For example, when the manager designates, as a data area, the vicinity of the driver seat of an arbitrary vehicle in an image, or the entirety of the vehicle, the comparing means 108 performs the comparison of the image data only for the portion designated in the image. When a data area is not designated, the comparing means 108 performs the comparison for the overall area of the image data.

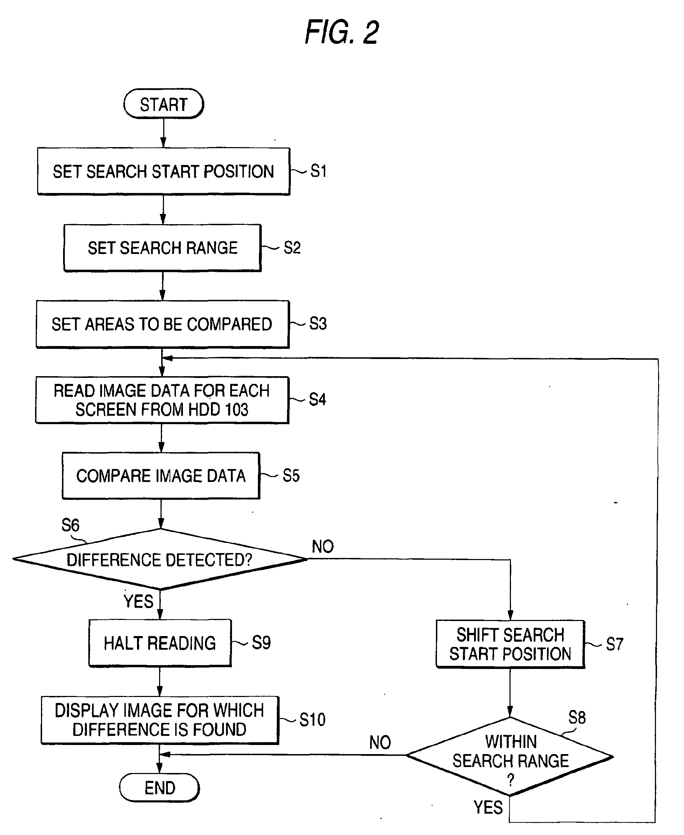

The operation, according to the first embodiment of the invention, of the image search apparatus will now be explained. Fig. 2 is a flowchart for explaining the search processing performed by the image search apparatus according to the first embodiment of the invention. First, the signals output by the monitor cameras 100A to 100d are coded by the coding means 101 to produce image data, and the coded image data are compressed by the data compression means 102. The compressed image data are then recorded on the HDD 103 by the CPU 104, together with the attribute data, such as photography date information and alarm information.

When under this condition image searching is to be performed, the CPU 104 designates the search start position for the image data stored on the HDD 103 (step S1), a search range (an image data search range for the search beginning at the search start position) is designated (step S2), and then a data area is designate for the comparison (step S3). All these setups are performed based on instructions issued by the manager.

Beginning at the designated search start position, the CPU 104 reads from the HDD 103, in order, all the compressed image data in order for each screen in the forward direction or in the reserve direction (step S4). The image data thus read are then decompressed by the data compression means 105.

When two or more sets of image data are decompressed by the data compression means 105, the comparing means 108 compares the data portion in the designated area in the image data with the data portion in the designated area in the image data that is decompressed next, and detects a difference between these two sets of image data (step S5).

When the comparing means 108 detects no difference (NO at step S6), no notification is transmitted by the comparing means 108 to the CPU 104, or a notification is transmitted that no difference has been found. Upon receiving the notification that no difference is represented, the CPU 104 shifts the search start position in the forward direction, or in the reverse direction (step S7), and determines whether the search start position is located within the search range that has initially been designated (step S8). When the search start position is within the search range, i.e., when the search has not yet been completed (YES at step S8), the CPU 104 repeats the processing beginning at step S4.

When the comparing means 108 detects a difference between the two sets of image data (YES at step S6), the comparing means 108 transmits to the CPU 104 a notification indicating that a difference has been found. Upon receiving this notification, the CPU 104 halts the sequential reading of image data (step S9) and permits the decoding means 106 to decode only that image data for which a difference has been found (for the image data sets that were compared, the image data that were decompressed later than the other image data), and to externally output the decoded image data as a video signal. The video signal is then displayed as an image on the image monitor 107 (step S10).

As is described above, according to this embodiment, the image data sequentially read by the CPU 104 are compared, and when a difference between two sets of image data is detected, the reading of image data by the CPU 104 is halted, and an image is displayed on the image monitor based on the image data for which a difference has been found.

Therefore, based on the perceived difference between the image data stored in the HDD 103, the manager of the monitor camera system can perform the fast scanning for an image for which a change has been found in a time sequence. When a change (difference) is found between an image photographed at a specific time and an image photographed at an immediately subsequent time, this change is important for the monitor camera system. When an image for which a change is found can be searched for by the fast scanning, as in this embodiment, images in the time sequence for which there is no change need not be confirmed on the image monitor, so that the image search operation can be considerably simplified.

Furthermore, according to this embodiment, the comparing means 108 performs the comparison for only one data area of the image data decompressed by the data decompressing means 105. Therefore, compared with when comparison is performed for all the area of the decompressed image data, the processing load imposed on the comparing means 108 can be greatly reduced, and a fast image search can be performed.

An example use of the image search apparatus of this embodiment will be specifically described.

Assume that a car belonging to a Mr. A, parked in a parking lot wherein monitor cameras are installed, has been stolen. When the time whereat Mr. A's car was stolen is not established, first, the manager of the monitor camera system employs the image search apparatus of this embodiment to start a search for an image wherein a thief can be viewed.

To begin this search, the manager designates, as a data area to be used for the comparison of image data, a portion of an image wherein the area in the vicinity of the driver seat of Mr. A's car can be viewed. Thereafter, when the search is begun, and when data for an image wherein the thief appears near the driver seat of Mr. A's car are read, the difference between the two sets of image data can be detected, and an image wherein the thief has just appeared is displayed on the image monitor 107. The manager can then sequentially display images, beginning with the image displayed on the image monitor 107, and can identify the activities of the thief.

As is described above, even when the time whereat Mr. A's car was stolen is unknown, only a difference in the image data must be detected in order for a search to be easily performed for an image that can be used as evidence in the theft.

### (Second Embodiment)

An image search apparatus according to a second embodiment of the invention has substantially the same configuration as is shown in Fig. 1 for the first embodiment, with the exception that, even when a comparison of two sets of image data by a comparing means 108 does not detect any difference between them, a CPU 104 does not halt the reading of image data, and that, when a difference is found by the comparing means 108, the CPU 104 reads image data beginning with the image data for which the difference is detected, and displays the image data on an image monitor 107.

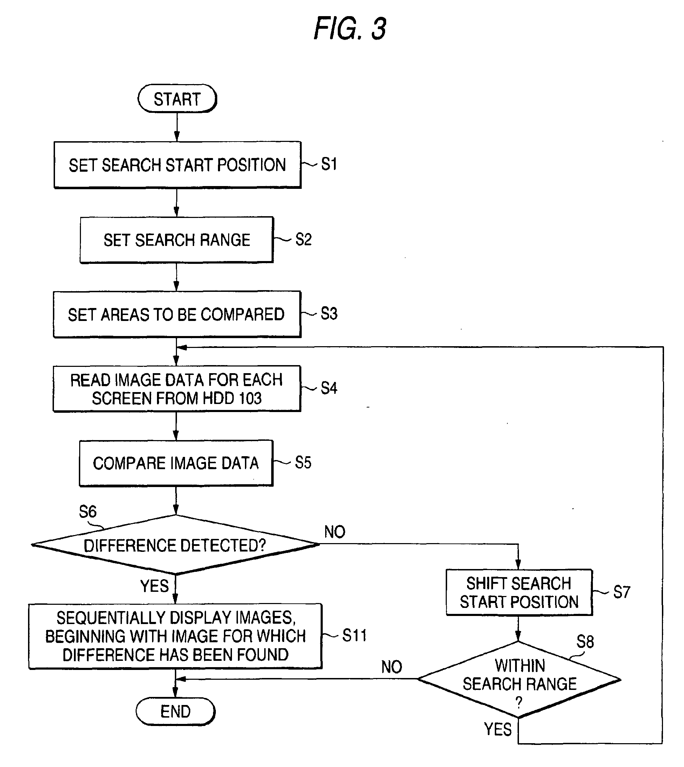

Fig. 3 is a flowchart for explaining the image search processing performed by the image search apparatus according to the second embodiment. The same numbers as are used in Fig. 2 are employed to denote corresponding steps in Fig. 3, and no further explanation for them will be given.

When a difference between two sets of image data is detected (YES at step S6 in Fig. 3), the comparing means 108 transmits to the CPU 104 a notification that a difference has been found. Upon receiving this notification, the CPU 104 displays on the image monitor 107 an image based on the image data for which the difference is detected, and thereafter, sequentially reads the image data and displays images on the image monitor 107 based on the image data (step S11).

As is described above, according to the second embodiment, when a difference is found between the two sets of image data read by the CPU 104, the image in which the difference is found is displayed on the image monitor 107, and images are displayed sequentially, beginning with the image in which the difference is detected. Therefore, an image in a time sequence for which a change has been detected can be searched for by fast scanning, and beginning with the image obtained by the fast scanning, images can be sequentially displayed.

### (Third Embodiment)

An image search apparatus according to a third embodiment of the invention has substantially the same configuration as is shown in Fig. 1 for the first or the second embodiment, with the exception that a list of attribute data accompanying with image data for which a difference has been found can be confirmed on an image monitor 107.

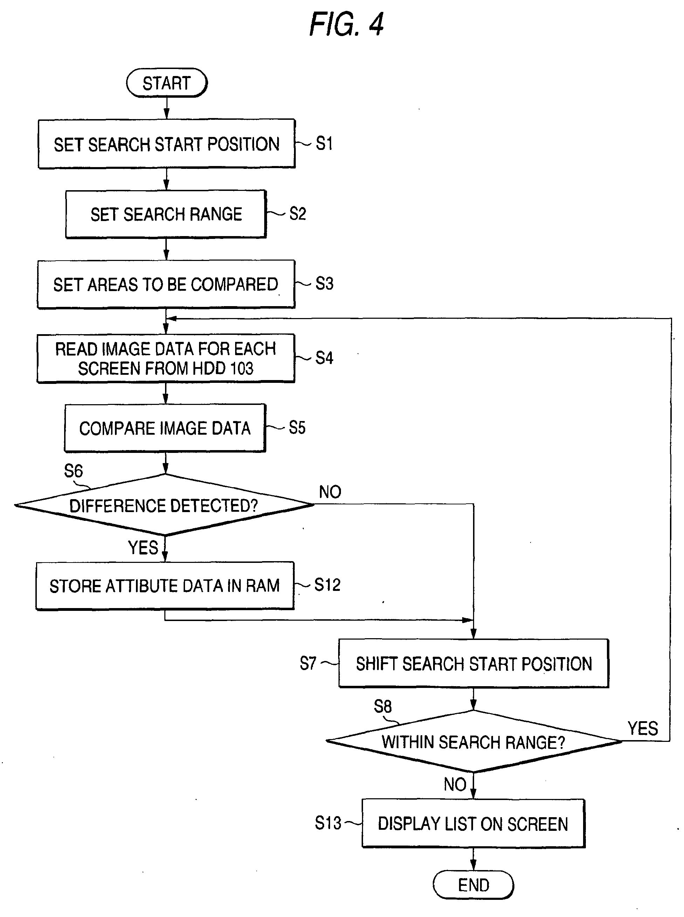

Fig. 4 is a flowchart for explaining the image search processing performed by the image search apparatus according to the third embodiment. The same numbers as are used in Fig. 2 are employed to denote corresponding steps in Fig. 4, and no further explanation for them will be given.

When a difference between two sets of image data is found (YES at step S6 in Fig. 4), a comparing means 108 transmits to a CPU 104 a notification that a difference has been found. Upon receiving this notification, the CPU 104 temporarily halts the sequential reading of image data, and stores in a RAM (not shown) attribute data that are recorded in association with the image data (step S12).

After the attribute data have been stored, the CPU 104 repeats the image search, and when the search of all the image data has been completed (NO at step S8), the CPU 104 employs the attribute data stored in the RAM to generate list data that represent the correlation between the image data for which a difference has been found and the attribute data, and displays a list, based on the list data, on the image monitor 107 (step S13). During this search, a decoding means 106 outputs to the image monitor 107 all the image data that have been decompressed by a data decompressing means 105.

As is described above, according to this embodiment, when a difference is detected between two sets of image data read by the CPU 104, the attribute data accompanying with the image data for which the difference is found are stored in the RAM, and once the search has been completed, the list of the stored attribute data is displayed on the image monitor 107.

Since the attribute data for an image in the time sequence for which there is a change can be confirmed by referring to the list of the attribute data displayed on the image monitor 107, the attribute data confirmed on the list can be employed as a search condition for the next image search operation.

### (Fourth Embodiment)

An image search apparatus according to a fourth embodiment of the invention has substantially the same configuration as is shown in Fig. 1 for the third embodiment, with the exception that, during the image search, all the image data decompressed by a data decompressing means 105 are not displayed, and only images for which a difference has been detected are sequentially displayed on an image monitor 107.

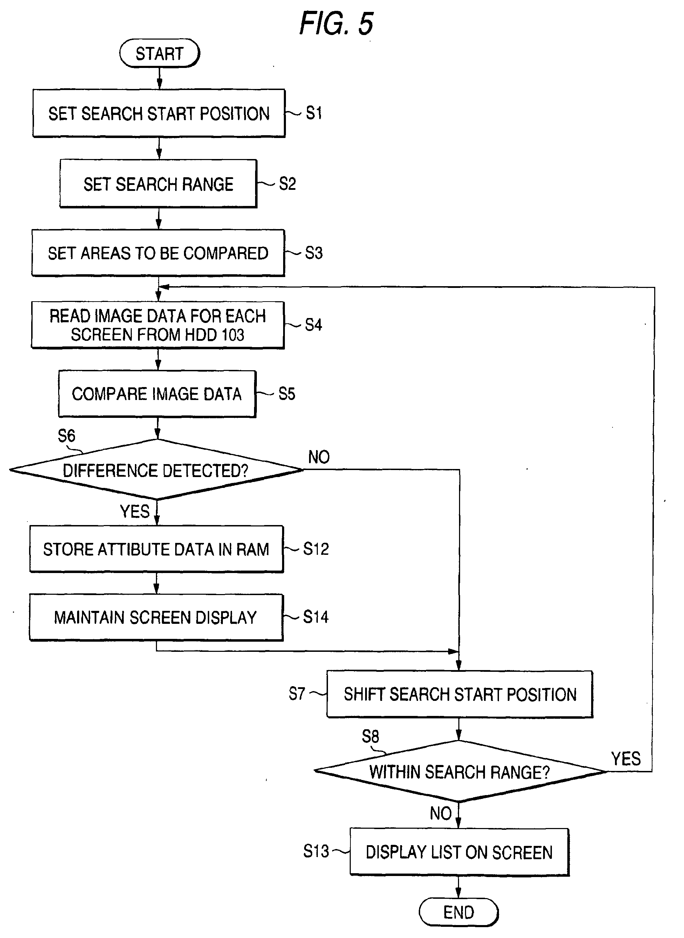

Fig. 5 is a flowchart for explaining the image search processing performed by the image search apparatus according to the fourth embodiment. The same numbers as those used in Fig. 4 are employed to denote corresponding steps in Fig. 5, and no further explanation for them will be given.

When attribute data are stored in a RAM (step S12 in Fig. 5), image data for which a difference has been detected are displayed on the image monitor 107, and the display of this image on the image monitor 107 is maintained until the next difference in image data is detected (step S14).

As is described above, according to this embodiment, when a difference is detected between two sets of image data read by a CPU 104, only images based on the image data are sequentially displayed. And since only an image in a time sequence for which a change is detected is displayed on the image monitor 107, all the image data need not be decoded by a decoding means 106. Therefore, the overall processing load imposed on the image search apparatus can be reduced, and a fast image search can be performed.

### (Fifth Embodiment)

An image search apparatus according to a fifth embodiment of the invention has substantially the same configuration as is shown in Fig. 1 for the third embodiment, with the exception that a function is additionally provided for storing, as a file, attribute data accompanying with an image that is searched for.

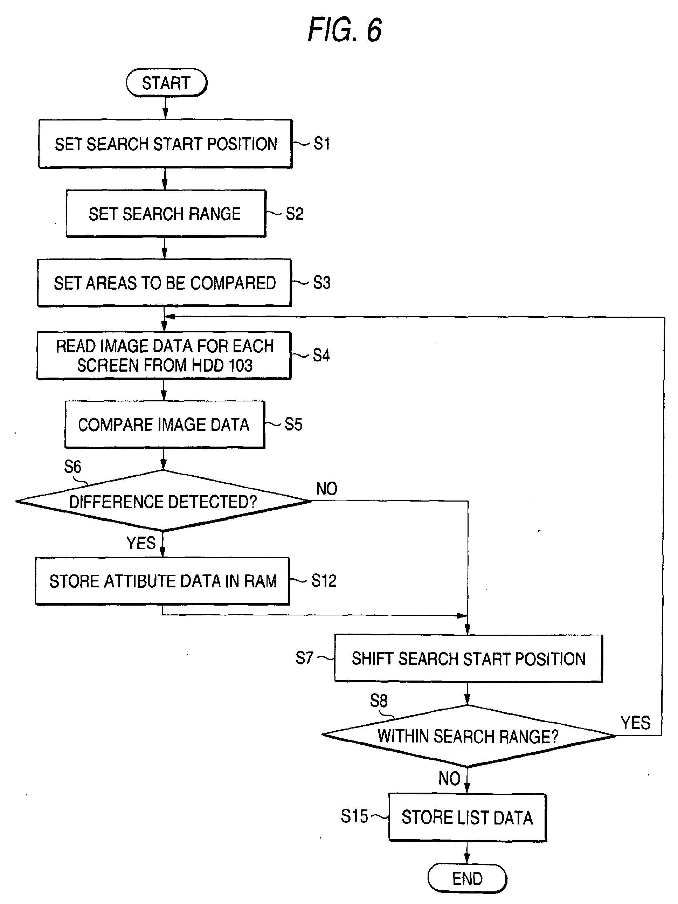

Fig. 6 is a flowchart for explaining the image search processing performed by the image search apparatus according to the fifth embodiment. The same numbers as are used in Fig. 4 are employed to denote corresponding steps in Fig. 6, and no further explanation for them will be given.

When the search of all the images has been completed (NO at step S8 in Fig. 6), a CPU 104 produces list data based on attribute data stored in a RAM, and stores the list data as a file in an HDD 103 (step S15). The manager of a monitor camera system can at any time read the list of data stored as a file, and can display the list data on an image monitor 107.

As is described above, according to this embodiment, since the attribute data can be stored as a file in the RAM, after the search has been completed, the list data can be read and displayed on the image monitor 107, and attribute data accompanying with an image in a time sequence for which a change has been found can be confirmed.

### (Sixth Embodiment)

An image search apparatus according to a sixth embodiment of the invention has substantially the same configuration as is shown in Fig. 1 for the fourth embodiment, with the exception that a function is additionally provided for storing, as a file, attribute data accompanying with an image that has been searched for.

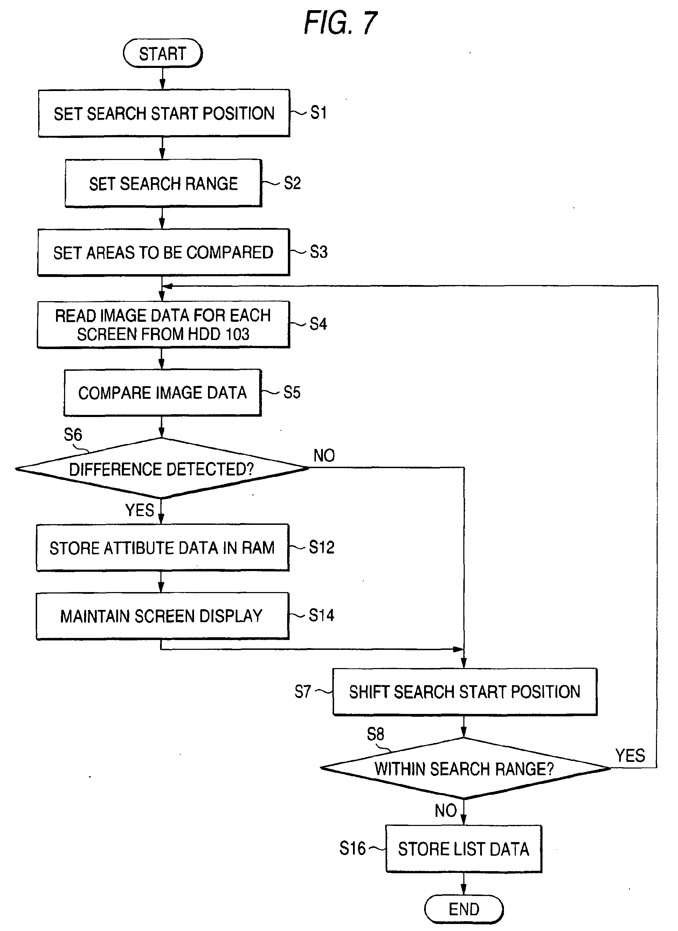

Fig. 7 is a flowchart for explaining the image search processing performed by the image search apparatus according to the sixth embodiment. The same numbers as are used in Fig. 5 are employed to denote corresponding steps in Fig. 7, and no further explanation for them will be given.

When a search of all the images has been completed (NO at step S8 in Fig. 7), a CPU 104 produces list data based on attribute data stored in a RAM, converts the list data into a file, and stores the file in an HDD 103 (step S16). Thus, the manager of a monitor camera system can at any time read the list data stored as a file, and can display the list data on an image monitor 107.

As is described above, according to this embodiment, since the attribute data can be stored as a file in a database, after a search has been completed, the list data can be read and displayed on the image monitor 107, and the attribute data accompanying with an image in a time sequence for which a change has been found can be confirmed.

## Claims

1. An image search apparatus, which searches an image recording means, wherein images picked up by a camera are recorded in a time sequence, for an arbitrary image, comprising:
reading means for sequentially reading images from the image recording means;
comparing means for performing a comparison a first image read by the reading means between a second image subsequently read; and
defining means for defining the second image as the arbitrary image when the first image and the second image are not match as a result of comparison by the comparing means; and
transmitting means for transmitting the second image as a search result.

2. The image search apparatus according to claim 1, wherein the comparing means compares a predetermined area of the first image read by the reading means with the predetermined area of the second image.

3. The image searching apparatus according to claim 1, wherein the images are recorded in the image recording means as image data which are obtained by coding image signals inputted from the camera and by compressing the coded image signals,
the image searching apparatus further comprising:
data decompressing means for decompressing image data read by the reading means;
decoding means for decoding image data decompressed by the data decompressing means; and
transfer means for transferring the image data decoded by the decoding means to a display device,
wherein the comparing means performs the comparison with the image data decompressed by the data decompressing means,
the reading means halts the sequential reading of images based on the search result transmitted from the transmitting means, and
the data decompressing means transmits image data of only the second image defined as the arbitrary image to the decoding means based on the search result transmitted from the transmitting means.

4. The image searching apparatus according to claim 1, wherein the images are recorded in the image recording means as image data which are obtained by coding image signals inputted from the camera and by compressing the coded image signals,
the image searching apparatus further comprising:
data decompressing means for decompressing image data read by the reading means;
decoding means for decoding image data decompressed by the data decompressing means; and
transfer means for transferring the image data decoded by the decoding means to a display device,
wherein the comparing means performs the comparison with the image data decompressed by the data decompressing means,
the data decompressing means sequentially transmits image data of the second image defined as the arbitrary image and image data which are successively read and decompressed to the decoding means based on the search result transmitted from the transmitting means.

5. The image search apparatus according to claim 1, further comprising:
holding means for obtaining and holding attribute data accompanying with the second image defined as the arbitrary image based on the search result transmitted from the transmitting means;
producing means for producing list data in which the attribute data held by the holding means are organized after the reading means completes the sequential reading of images; and
transfer means for transmitting the list data produced by the producing means to the display device which displays a list based on the list data.

6. The image search apparatus according to claim 1, wherein the images are recorded in the image recording means as image data which are obtained by coding image signals inputted from the camera and by compressing the coded image signals,
the image searching apparatus further comprising:
data decompressing means for decompressing image data read by the reading means;
decoding means for decoding image data decompressed by the data decompressing means;
transfer means for transferring the image data decoded by the decoding means to a display device;
holding means for obtaining and holding attribute data accompanying with the second image defined as the arbitrary image based on the search result transmitted from the transmitting means; and
producing means for producing list data in which the attribute data held by the holding means are organized after the reading means completes the sequential reading of images,
wherein the comparing means performs the comparison with the image data decompressed by the data decompressing means,
the data decompressing means transmits image data of only the second image defined as the arbitrary image to the decoding means, and
the transfer means transmits the list data produced by the producing means to the display device which displays a list based on the list data.

7. The image search apparatus according to claim 5, further comprising:
storage means for storing the list data produced by the producing means.

8. The image search apparatus according to claim 6, further comprising:
storage means for storing the list data produced by the producing means.
